# EUROPEAN PATENT APPLICATION

(11) **EP 0 585 498 A1**
(43) Date of publication of application: **09.03.1994**
(21) Application number: 92307958.6
(22) Date of filing: 02.09.1992
(51) Int. Cl.: B60P 7/13

(54) **Twistlocks**

(71) Applicant: MULTI-STROKE HANDBRAKE CONTROLS LIMITED, Tewkesbury Gloucestershire GL20 8HD (GB)
(72) Inventor: Lycett, Peter, Sutton Coldfield, West Midlands B74 2EL (GB)
(74) Representative: Pacitti, Pierpaolo A.M.E.

(57) **Abstract**

There is described a retractable screw-down twistlock (20) which has a stable configuration intermediate a retractable configuration and a container locking configuration. The twistlock has a housing (22), which carries a register (32) and an anvil bolt (38). In the intermediate configuration the register (32) and the anvil bolt (38) are conjointly raised and mutually aligned such that a container can be lowered onto and fitted over the bolt (38) and register (32) without the twistlock (20) being held manually in the intermediate configuration. This is achieved by providing a collar (52) fitted to the bolt (38), the collar cooperating with a guide (68, 70) fixed in the housing (22). The guide (68, 70) and the collar (52) cooperate to define the different configurations of the twistlock in use.

## Description

This invention relates to devices known in the art as "twistlocks", which are devices for use to locate and lock I.S.O. freight transport containers (and equivalent containers built to other standards) in position on road vehicle trailers, railway wagons, and the like.

A twistlock normally comprises two essential components: (1) a locating block or "register"; and (2) a T-headed bolt or "anvil bolt". The register provides lateral location and restraint to the respective corner fitting of the I.S.O. container. The centre of the register normally has a hole which accommodates the stem of the anvil bolt, with the head of the anvil bolt being located just above the top of the register. The register is very approximately rectangular in plan. By turning the anvil bolt vertically around its stem (protruding up through the middle of the register), the T-shaped head of the anvil bolt can be either aligned with the register, or turned cross-ways thereto. When the register and the bolt head are aligned, an I.S.O. container can be lowered onto and fitted over the bolt and register, or lifted away from them. When the bolt head is turned cross-ways to the register with an I.S.O. container in place, the container is latched in place (assuming the register and the anvil bolt to be suitably anchored). Such twistlocks are well known, both for I.S.O. containers, and for containers complying with other standards.

For reasons which are known in the art, it is desirable that both the register and the anvil bolt should be retractable into the carrying deck of the relevant vehicle, or otherwise lowered to positions in which they do not protrude to cause obstructions and hazards. Manual controls to carry out the various operations involved in utilising such retractable twistlocks should preferably be simple, safe, and non-detachable.

It is also known in the art that a container retained by twistlocks can be made more secure against unwanted movements during transport by tightening the anvil bolt downwards, most simply by some form of screw clamp. Examples of such forms of "retractable screwdown twistlocks" are known from patent specifications GB-A-1574708 and EP-B-0301876.

It is an object of the present invention to provide a retractable screwdown twistlock which is capable of having a stable "hands-off" configuration intermediate the retracted configuration and the container-locking configuration, in which intermediate configuration the register and the anvil bolt are conjointly raised and mutually aligned such that a container can be lowered onto and fitted over the bolt and register, or lifted away from them, without the necessity of the twistlock being manually held in such intermediate configuration.

According to the present invention there is provided a retractable screwdown twistlock comprising a housing, a register, and an anvil bolt, said housing having a top plate including an aperture therein, said aperture being dimensioned to permit said register and said bolt to be moved therethrough, said bolt having a T-shaped head and a cylindrical stem depending from said head, said register having a central aperture through which said bolt stem passes, the end of said bolt stem remote from said head being screw-threaded and fitted with a handwheel which can be screwed up said bolt to bear against said housing and thereby cause said bolt head to perform a clamping action on a container fitting or other entity located between said bolt head and said top plate of said housing, said housing, said register, and said bolt being relatively movable from a retracted configuration through an intermediate configuration to a container-locking configuration and vice versa, wherein in said retracted configuration said register and said bolt head are retracted through said aperture so as substantially not to project from said top plate, wherein in said intermediate configuration said register and said bolt head project from said top plate in mutual substantial alignment to have a container fitting lowered onto and fitted over said register and said bolt head, or lifted away from them, and wherein in said container-locking configuration said bolt head is rotationally substantially misaligned with said register for performance of said clamping action, said twistlock further comprising translation constraint means mutually coupling said housing with said register and said bolt to constrain relative movement between said housing, said register, and said bolt, said translation constraint means being such that said register and said bolt are mutually axially constrained for substantially conjoint axial movement coaxially with said bolt stem in translation between all configurations, said register is rotationally substantially constrained in translation between all configurations, said bolt is rotationally constrained in translation between said retracted configuration and said intermediate configuration to maintain said bolt head rotationally substantially aligned with said register in such translation whereas said bolt is rotationally freed in translation between said intermediate configuration and said container-locking configuration for rotational movement of said bolt head between said substantial alignment with said register and said substantial misalignment with said register, and said translation constraint means being selectively operable to maintain said register and said bolt head in said intermediate configuration.

Said translation constraint means preferably comprises a collar means integral with or secured to said bolt stem, and guide means integral with or secured to said housing, said collar means having a periphery shaped and dimensioned to cooperate with said guide means for said rotational constraint of said bolt in transition between said retracted configuration and said intermediate configuration, and for said rotational freeing of said bolt between said intermediate configuration and said container-locking configuration, said collar means and said guide means being selectively mutually alignable for maintenance of said intermediate configuration.

Said guide means preferably comprises axial guide means providing simultaneous rotational constraint and axial freedom in translation between said retracted configuration and said intermediate configuration, said guide means and said periphery of said collar means being so shaped and dimensioned that rotation of said bolt and of said collar means therewith by an odd integral multiple of substantially half of a revolution with respect to said guide means baulks axial movement of said bolt head with respect to said housing while said bolt head is substantially re-aligned with said register. Said axial guide means preferably further provides simultaneous rotational constraint and axial freedom upon rotation of said bolt and of said collar means therewith by an odd integral multiple of substantially quarter of a revolution with respect to said guide means to form said container-locking configuration.

Said periphery of said collar means is preferably formed with a substantially diametrically opposed tongue and slot and said axial guide means is formed as an opposed groove and ridge each having a respective step at an end thereof adjacent said top plate of said housing whereby in one rotational position of said collar means with respect to said housing, said tongue engages with said groove and said slot engages with said ridge to provide said simultaneous rotational constraint and axial freedom in translation between said retracted configuration and said intermediate configuration, and in a further rotational position of said collar means with respect to said housing rotationally displaced from said one position by substantially half of a revolution while said collar means is adjacent said top plate of said housing, said tongue is substantially aligned over said step of said ridge and portions of said periphery of said collar means defining said slot are substantially aligned over said step of said groove such as to baulk axial movement of said collar means with respect to said axial guide means.

Said collar means may be secured to said bolt stem with said register located between said collar means and said bolt head such as substantially to eliminate axial freedom of movement of said register on said bolt while simultaneously permitting rotational freedom of said bolt with respect to said register through at least half of a revolution.

Said register may be coupled with said translation constraint means for simultaneous relative freedom of axial movement and relative constraint of rotational movement of said register with respect to said housing, conveniently by forming said aperture substantially to match at least part of said periphery of said register with a minimal clearance therefrom.

Embodiments of the invention will now be described by way of example, with reference to the accompanying drawings wherein:
Fig. 1 is a front elevation of a retractable screwdown twistlock in accordance with the invention, in a retracted configuration;
Fig. 2 is a front elevation of the twistlock of Fig. 1, in a container-locking configuration;
Fig. 3 is a right side elevation of the twistlock of Fig. 2;
Fig. 4 is a plan view of the twistlock of Fig. 2;
Fig. 5 is a plan view, to an enlarged scale, of a collar forming part of the twistlock of Figs. 1-4;
Fig. 6 is a view from beneath of the collar of Fig. 5;
Fig. 7 is a half-sectional side elevation of the collar of Fig. 5, taken on the line VII-VII in Fig. 5;
Fig. 8 is another side elevation of the collar of Fig.5, as viewed in the direction of the arrow VIII in Fig. 5;
Fig. 9 is a left side elevation to a much enlarged scale, of the twistlock of Fig. 2; and
Fig. 10 is a sectional plan view of the twistlock of Fig. 9, taken on the line X-X in Fig. 9.

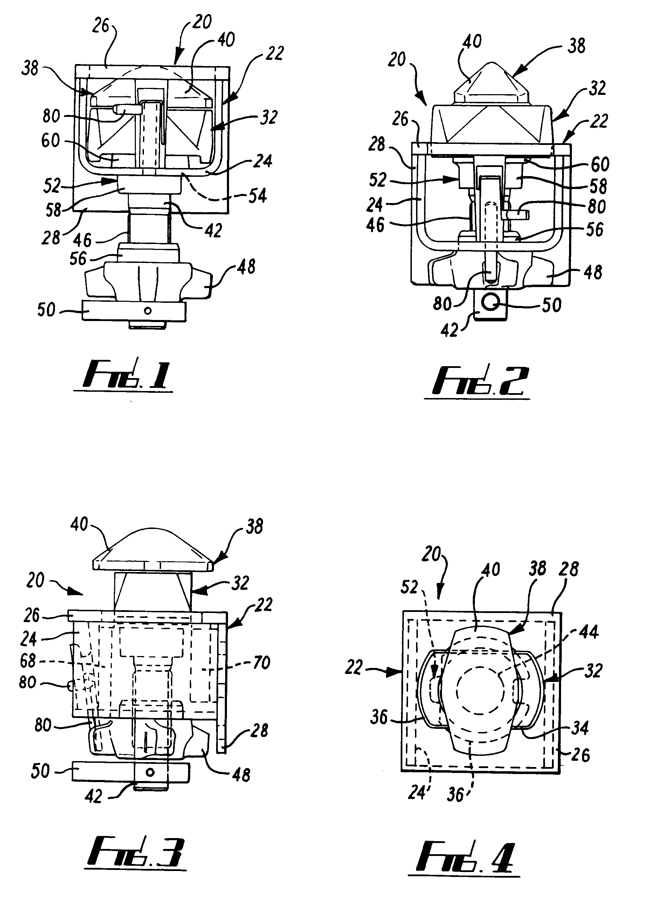

Referring first to Fig. 1, this is a front elevation of a retractable screwdown twistlock 20 in accordance with the present invention. The twistlock 20 comprises a housing 22 in the form of a U-shaped channel member 24 capped by a housing top plate member 26. The housing member 24 and the top plate 26 are secured to each other (eg. by welding) and to a housing backplate member 28.

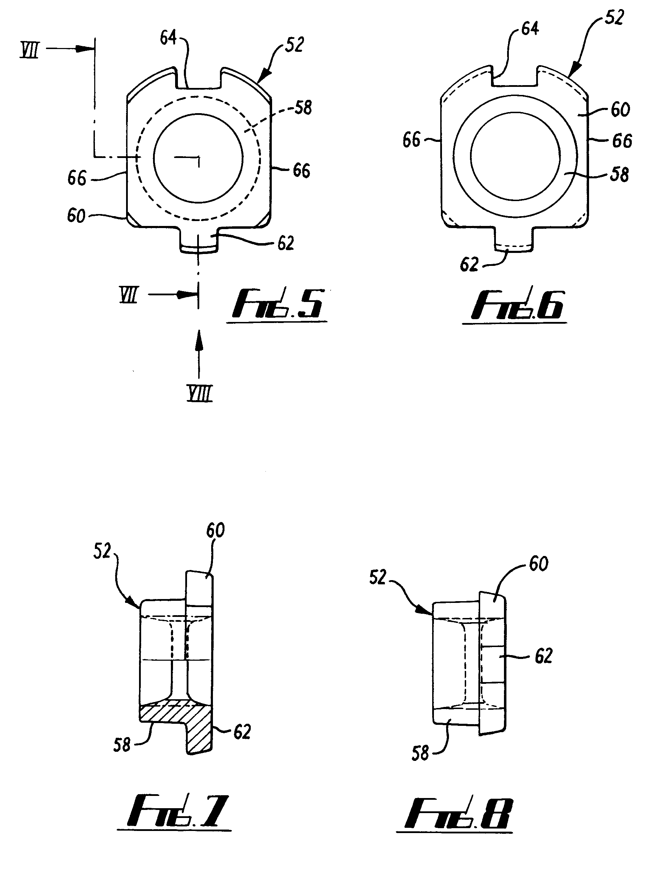

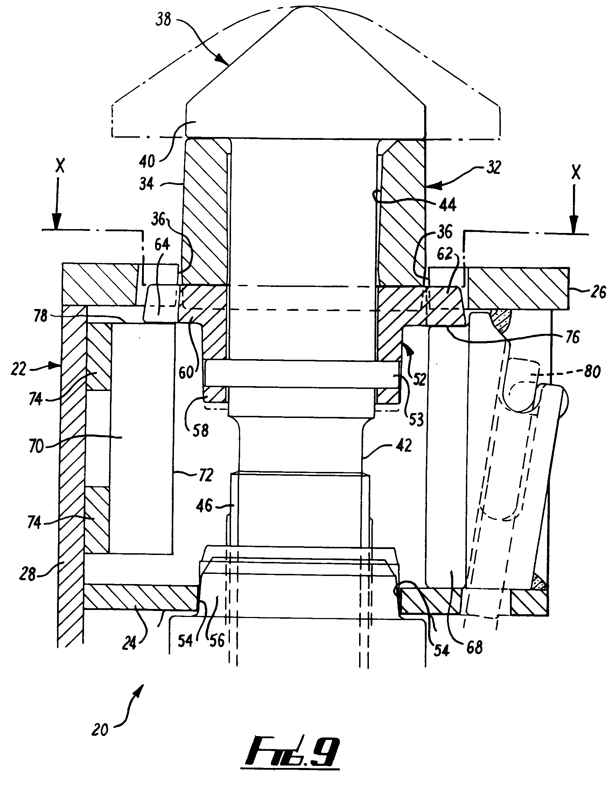

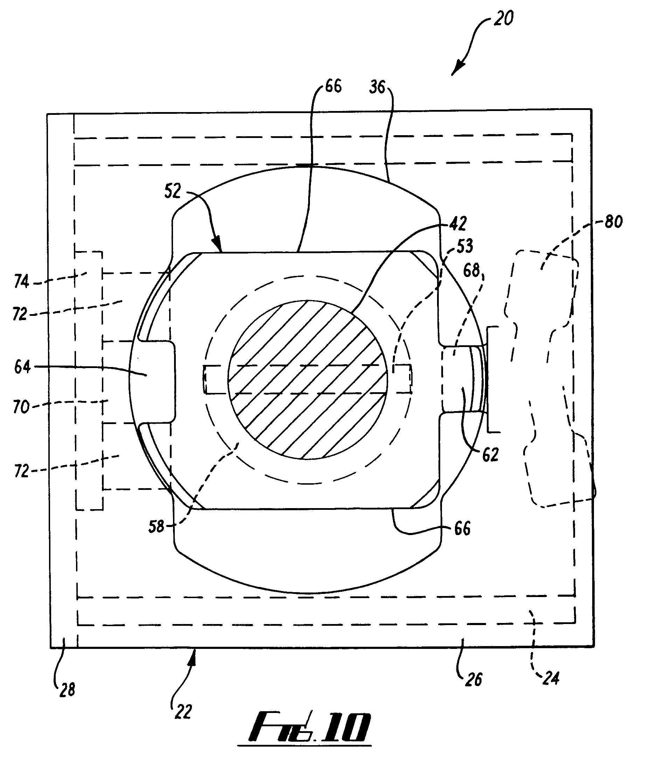

The twistlock 20 further comprises a register 32 having a periphery 34 which is of approximately rectangular outline in plan (see Fig. 4). An aperture 36 is formed in the top plate 26, the aperture 36 having a shape similar to the wider ends of the register periphery 34 and a marginally larger size such that the register 32 can pass vertically through the aperture 36 with a small clearance.

The twistlock 20 additionally comprises an anvil bolt 38 having a T-shaped head 40 and a cylindrical stem 42 depending from the head 40 through a central aperture 44 in the register 32. The lower end of the bolt stem 42, ie the end of the bolt stem 42 remote from the head 40, is provided with a screw-thread 46 and fitted with a headwheel 48 which can be screwed up the bolt 38 to bear against the channel member 24 of the twistlock housing 22 (see Fig. 2) for a purpose to be detailed subsequently.

The bottom end of the bolt stem 42 has a lever 50 secured thereto. The lever 50 serves to enable the bolt 38 to be manually rotated by a twistlock operator, for purposes to be detailed subsequently. The lever 50 also serves to prevent loss of the handwheel 48 by excessive unscrewing thereof down the bolt stem 42.

A collar 52 is secured to the bolt stem 42 immediately below the register 32 by means of a transverse pin 53 (see Figs. 9 and 10) such that the register 32 is axially restrained between the bolt head 40 and the collar 52 while being free to rotate on the bolt stem 42 in its axially restrained location. (The collar 52 will be detailed below with specific references to Figs. 5-8).

Fig. 1 shows the twistlock 20 in its retracted configuration wherein the register 32 and the bolt head 40 are fully retracted through the aperture 36 in the top plate 26 to lie wholly within the twistlock housing 22 so leaving the top face of the twistlock 20 free of any projection or proturbeance. In this retracted configuration, the collar 52 depends partly through a hole 54 in the bottom of the channel member 24 (see Fig.9). When the twistlock 20 is in the container-locking configuration (Fig. 2),the bolt head 40 and the register 32 project through the aperture 36 to project above the top plate 26, the collar 52 is lifted out of the housing bottom hole 54 and up to a location adjacent the top plate 26 (see Fig.9), and an upper neck 56 on the handwheel 48 enters the housing bottom hole 54 from below.

Before proceeding to a detailed description of operation of the twistlock 20, the collar 52 will now be described in greater detail with particular reference to Figs. 5-8 wherein the collar 52 is illustrated as an individual component separate from all other components of the twistlock 20.

The collar 52 is shaped as a generally cylindrical sleeve 58 having a flange 60 at one end thereof. The periphery of the flange 60 is shaped to form a tongue 62 and a diametrically opposed slot 64. Between the tongue 62 and the slot 64, opposite side portions 66 of the periphery of the flange 60 are truncated along respective planes parallel to the diametrical plane including the centre line of the tongue 62 and the slot 64. As may be particularly seen in Figs. 5 and 6, the root of the tongue 62, the bottom of the slot 64, and the side portions 66 are all at substantially equal distances from the axis of the collar 52 such that these features of the collar 52 lie on a symmetrically disposed notional square (whose functional significance will be explained below). In other aspects, the collar 52, and particularly the periphery of the flange 60, is rotationally asymmetrical as can be seen by comparing the complementary profiles of the tongue 62 and the slot 64 in Fig. 5; the functional significance of the latter asymmetry will also be explained below.

As shown in Figs. 7 and 8, the collar 52 is conveniently fabricated as a forging or casting with an initially blind bore which is subsequently punched out and finally drilled to size to fit around the bolt stem 42.

Further important features of the twistlock 20 which are not readily apparent in Figs. 1-4 will now be described with reference to Figs. 9 and 10. These further features comprise guideways located within the twistlock housing 22, these guideways having the form of a vertically aligned ridge or male keyway 68 located towards the front of the housing 22 (ie towards the right as viewed in Fig. 9) and a vertically aligned groove or female keyway 70 located towards the rear of the housing 22 (ie, towards the left as reviewed in Fig. 9). As shown in Figs. 9 and 10, the groove or female keyway 70 is defined as a gap between an adjacent pair of laterally symmetrically disposed vertical bars 72 mounted in the backplate 28 by means of spacer blocks 74; alternatively, the groove 70 could be cut or otherwise formed in a suitably thickened central portion of the backplate 28.

As particularly shown in Fig. 9, each of the ridge 68 and the bars 72 extends vertically upwards towards but terminates short of the underside of the top plate 26 to form respective steps 76 and 78 at a common height within the housing 22.

The lateral width of the ridge or male keyway corresponds to and is marginally less that the width of the slot 64 in the periphery of the flange 60 of the collar 52.

The lateral width of the groove or female keyway 70 corresponds to and is marginally greater than the width of the tongue 62 in the periphery of the flange 60 of the collar 52.

The lateral separation of the inner faces of the ridge 68 and of the bars 72 corresponds to and is marginally greater that the diametrical separation of the base of the slot 64 and the root of the tongue 62 on the periphery of the flange 60 of the collar 52, as well as corresponding to and being marginally greater than the dimensionally equal diametrical separation of the opposite side portions 66 of the flange 60 of the collar 52.

Thus, when the collar 52 is rotationally aligned at a position which is half a revolution displaced from the position illustrated in Fig. 10, the tongue 62 can slide vertically in the groove or female keyway 70 and the slot 64 can slide vertically on the ridge or male keyway 68 to provide simultaneous rotational constraint and axial freedom to the collar 52 and hence to the bolt 38 (mutually secured by the pin 53) in their translation between the retracted configuration (Fig. 1) and the container-locking configuration (Fig. 2).

Similarly, when the collar 52 is rotationally aligned at a position which is quarter of a revolution displaced from the position illustrated in Fig. 10, (eg, as schematically depicted in Fig. 4), the opposite side portions 66 of the flange 60 of the collar 52 can slide vertically between the inner faces of the ridge 68 and of the bars 72 to provide simultaneous rotational constraint and axial freedom to the collar 52 and the bolt 38 in the container-locking configuration.

When the collar 52 is raised to at least the height shown in Fig. 10 to bring the collar flange 60 above the upper ends of the ridge 68 and of the bars 72, thus to free the collar 52 of their radial constraint (effective at lesser elevations of the collar 52), the collar 52 may optionally be rotationally aligned in the position illustrated in Fig. 9 in which the tongue 62 overlies the step 76 on top of the ridge 68 and portions of the flange 60 on either side of the slot 64 overlie the steps 78 on top of the bars 72. Thus in the rotational alignment shown in Fig. 9, these steps 76 and 78 act as abutments which baulk descent of the collar 53 and hence of the bolt 38 secured thereto. This configuration is one in which the register 32 and the bolt head 40 are raised to project above the top plate 26 to serve as horizontal locations for lateral alignment of a container (not shown), but one in which the bolt head 40 remains rotationally aligned with the register 32 thus to permit the container to be lowered onto or lifted off the projecting register 32. Thus the alignment of Figs. 9 and 10 yields a twistlock configuration intermediate the retracted configuration of Fig. 1 and the container-locking configuration of Fig. 2, and this intermediate configuration is a stable configuration which, once achieved, does not require continuous manual intervention for its maintenance.

Once the intermediate configuration is no longer required, the weights of the collar 52, the bolt 28, the register 32 supported thereby, and the handwheel 48 can be relieved from the steps 76 and 78, the collar 52 suitably re-aligned and lowered, and the twistlock 20 re-formed in the selected one of the other configurations.

Rotational alignment of the bolt 38 and the collar 52 secured thereto by the pin 53 can be most readily achieved by the application of suitable manual force to the lever 50, while raising and lowering of the bolt 38 together with the collar 52 and the register 32 can most readily be achieved by the application of suitable manual force to the lever 50 and/or to the handwheel 48.

When the twistlock 20 is in the container-locking configuration (Figs. 2-4), screwing of the handwheel 48 up the screw-thread 46 on the bolt stem 52 will cause the handwheel neck 56 to enter the hole 54 in the bottom of the channel member 24 and then bring the base of the neck 56 into contact with the underside of the channel member 24, ultimately tightening and clamping a container fitting (or other object) located between the top plate 26 of the twistlock housing 22 and the underside of the wings of the T-shaped bolt head 40. A manually operable drop bolt 80 (or any other suitable latching device) can then be released from an upper inactive position (shown in Fig. 1) to an active lower position (shown in Figs. 2 and 3) in which the lower end of the drop bolt depends between spokes or knurls of the handwheel 48 to prevent unintended unscrewing thereof.

The handwheel 48 may be substituted either with an internally-threaded collar (with or without an integral handle), or with a suitably dimensioned nut.

While only a single twistlock has been described above in detail, twistlocks are customarily employed in groups, for example groups of four with one for each bottom corner of a freight container; therefore use of the twistlock in accordance with the invention should be deemed to be in an appropriate plurality thereof if use of a solitary twistlock is inadequate or undesirable.

Furthermore, while it has been assumed that the twistlock in accordance with the invention is utilised in the upright attitude shown in the accompanying drawings, the twistlock can be operated in other inclinations as desired and descriptive words relating to attitudes and relative heights are to be construed accordingly.

Notwithstanding that certain modifications and variations have been described above, the invention is not restricted thereto, and other modifications and variations can be adopted without departing from the scope of the invention as defined in the appended Claims.

## Claims

1. A retractable screwdown twistlock (20) comprising a housing (22), a register (32), and an anvil bolt (38), said housing (22) having a top plate (26) including an aperture (36) therein, said aperture (36) being dimensioned to permit said register (32) and said bolt (38) to be moved therethrough, said bolt (38) having a T-shaped head (40) and a cylindrical stem (42) depending from said head (40), said register (32) having a central aperture (44) through which said bolt stem (42) passes, the end of said bolt stem (42) remote from said head (40) being screw-threaded (46) and fitted with a handwheel (48) which can be screwed up said bolt (38) to bear against said housing (22) and thereby cause said bolt head (40) to perform a clamping action on a container fitting or other entity located between said bolt head (40) and said top plate (26) of said housing (22), characterised in that said housing (22), said register (32), and said bolt (38) are relatively movable from a retracted configuration through an intermediate configuration to a container-locking configuration and vice versa, wherein in said retracted configuration said register and said bolt head (40) are retracted through said aperture (36) so as substantially not to project from said top plate (26), wherein in said intermediate configuration said register (32) and said bolt head (40) project from said top plate (26) in mutual substantial alignment to have a container fitting lowered onto and fitted over said register (32) and said bolt head (40), or lifted away from them, and wherein in said container-locking configuration said bolt head (40) is rotationally substantially misaligned with said register (32) for performance of said clamping action, said twistlock (20) further comprising translation constraint means (36, 52, 68, 70) mutually coupling said housing (22) with said register (32) and said bolt (38) to constrain relative movement between said housing (22), said register (32), and said bolt (38), said translation constraint means (36, 52, 68, 70) being such that said register (32) and said bolt (38) are mutually axially constrained for substantially conjoint axial movement coaxially with said bolt stem (42) in translation between all configurations, said register (32) is rotationally substantially constrained in translation between all configurations, said bolt (38) is rotationally constrained in translation between said retracted configuration and said intermediate configuration to maintain said bolt head (40) rotationally substantially aligned with said register (32) in such translation whereas said bolt (38) is rotationally freed in translation between said intermediate configuration and said container-locking configuration for rotational movement of said bolt head (40) between said substantial alignment with said register (32) and said substantial misalignment with said register (32), and said translation constraint means (36, 52,68, 70) being selectively operable to maintain said register (32) and said bolt head (40) in said intermediate configuration.

2. A twistlock as claimed in Claim 1, characterised in that said translation constraint means (36, 52, 68, 70) comprises a collar means (52) integral with or secured to said bolt stem (42), and guide means (68, 70) integral with or secured to said housing (22), said collar means (52) having a periphery (60) shaped and dimensioned to cooperate with said guide means (68, 70) for said rotational constraint of said bolt (38) in transition between said retracted configuration and said intermediate configuration, and for said rotational freeing of said bolt (38) between said intermediate configuration and said container-locking configuration, said collar means (52) and said guide means (68, 70) being selectively mutually alignable for maintenance of said intermediate configuration.

3. A twistlock (20) as claimed in Claim 2, characterised in that said guide means (68, 70) comprises axial guide means providing simultaneous rotational constraint and axial freedom in translation between said retracted configuration and said intermediate configuration, said guide means (68, 70) and said periphery (60) of said collar means (52) being so shaped and dimensioned that rotation of said bolt (38) and of said collar means (52) therewith by an odd integral multiple of substantially half of a revolution with respect to said guide means baulks axial movement of said bolt head (40) with respect to said housing (22) while said bolt head (40) is substantially realigned with said register (32).

4. A twistlock (20) as claimed in Claim 3, characterised in that said axial guide means (68, 70) provides simultaneous rotational constraint and axial freedom upon rotation of said bolt (38) and of said collar means (52) therewith by an odd integral multiple of substantially quarter of a revolution with respect to said guide means (68, 70) to form said container-locking configuration.

5. A twistlock (20) as claimed in Claim 3 or Claim 4, characterised in that said periphery (60) of said collar means (52) is formed with a substantially diametrically opposed tongue (62) and slot (64) and said axial guide means (68, 70) is formed as an opposed groove (70) and ridge (68) each having a respective step (78, 76) at an end thereof adjacent said top plate (26) of said housing (22) whereby in one rotational position of said collar means (52) with respect to said housing (22), said tongue (62) engages with said groove (70) and said slot (64) engages with said ridge (68) to provide said simultaneous rotational constraint and axial freedom in translation between said retracted configuration and said intermediate configuration, and in a further rotational position of said collar means (52) with respect to said housing (22) rotationally displaced from said one position by substantially half of a revolution while said collar means (52) is adjacent said top plate (26) of said housing (22), said tongue (62) is substantially aligned over said step (76) of said ridge (68) and portions of said periphery (60) of said collar means (52) defining said slot (64) are substantially aligned over said step (78) of said groove (70) such as to baulk axial movement of said collar means (52) with respect to said axial guide means (68, 70).

6. A twistlock (20) as claimed in any of Claims 2 to 5, characterised in that said collar means (52) is secured to said bolt stem (42) with said register (32) located between said collar means (52) and said bolt head (40) such as substantially to eliminate axial freedom of movement of said register (32) on said bolt (38) while simultaneously permitting rotational freedom of said bolt (38) with respect to said register (32) through at least half of a revolution.

7. A twistlock (20) as claimed in any preceding Claim, characterised in that said register (32) is coupled with said translation constraint means (36, 52, 68, 70) for simultaneous relative freedom of axial movement and relative constraint of rotational movement of said register (32) with respect to said housing (22) by forming said aperture (36) substantially to match at least part of the periphery (34) of said register (32) with a minimal clearance therefrom.
